(19) **Europäisches Patentamt / European Patent Office / Office européen des brevets**

(11) **EP 4 239 423 B1**

(12) **EUROPEAN PATENT SPECIFICATION**

(45) Date of publication and mention
of the grant of the patent:
**06.05.2026 Bulletin 2026/19**

(21) Application number: **22159967.3**

(22) Date of filing: **03.03.2022**

(51) International Patent Classification (IPC):
**G05B 19/042** (2006.01)     **B25J 9/16** (2006.01)
**G05B 9/02** (2006.01)     **G05B 13/02** (2006.01)
**G06N 3/08** (2023.01)

(52) Cooperative Patent Classification (CPC):
**G05B 19/0426; B25J 9/1666; G06N 3/006;
G06N 3/08; G06N 3/088;** G05B 9/02; G05B 13/027;
G05B 2219/33056

(54) **DEVICE AND METHOD FOR DETERMINING SAFE ACTIONS TO BE EXECUTED BY A TECHNICAL SYSTEM**

VORRICHTUNG UND VERFAHREN ZUM BESTIMMEN VON DURCH EIN TECHNISCHES SYSTEM AUSZUFÜHRENDEN SICHEREN AKTIONEN

DISPOSITIF ET PROCÉDÉ POUR DÉTERMINER DES ACTIONS SÉCURISÉES DESTINÉES À ÊTRE EXÉCUTÉES PAR UN SYSTÈME TECHNIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.09.2023 Bulletin 2023/36**

(73) Proprietor: **Robert Bosch GmbH
70442 Stuttgart (DE)**

(72) Inventors:
• **Straehle, Christoph-Nikolas
71263 Weil Der Stadt (DE)**
• **Geiger, Philipp
76135 Karlsruhe (DE)**

(56) References cited:
**EP-A1- 3 838 505     US-A1- 2020 104 680**

**Description**

Technical field

The invention relates to a computer-implemented method for training a control system, a training system, a control system, a computer program, and a machine-readable storage medium.

Prior art

Bhattacharyya et al. 2020 "Modeling Human Driving Behavior through Generative Adversarial Imitation Learning", https://arxiv.org/abs/2006.06412v1 discloses the use of generative adversarial imitation learning for learning-based driver modeling.

EP 3 838 505 A1 discloses a computer-implemented method (700) of configuring a system which interacts with a physical environment. An action of the system in a state of the physical environment results in an updated state of the physical environment according to a transition probability. A safe set of state-action pairs known to be safely performable and an unsafe set of state-action pairs to be avoided are indicated. During an environment interaction, a safe set of state-action pairs is updated by estimating a transition probability for a state-action pair based on an empirical transition probability of a similar other state-action pair, and including the state-action pair in the safe set of state-action pairs only if the state-action pair is not labelled as unsafe and the safe set of state-action pairs can be reached with sufficient probability from the state-action pair based on the estimated transition probability.

US 2020/0104680 A1 discloses methods, systems, and apparatus, including computer programs encoded on a computer storage medium, for training an action selection policy neural network, wherein the action selection policy neural network is configured to process an observation characterizing a state of an environment to generate an action selection policy output, wherein the action selection policy output is used to select an action to be performed by an agent interacting with an environment. In one aspect, a method comprises: obtaining an observation characterizing a state of the environment subsequent to the agent performing a selected action; generating a latent representation of the observation; processing the latent representation of the observation using a discriminator neural network to generate an imitation score; determining a reward from the imitation score; and adjusting the current values of the action selection policy neural network parameters based on the reward using a reinforcement learning training technique.

Technical background

Modern technical devices often-times interact with their environment by executing certain actions. For example, a robot arm may move from one point to another wherein the movement may constitute an action. An at least partially automated vehicle may execute a longitudinal and/or lateral acceleration, e.g., by steering and/or acceleration of the wheels. A manufacturing robot may further execute actions specific to a tool mounted to the robot, e.g., gripping, cutting, welding, or soldering.

An action to be executed by a technical system is typically determined by a control system. In most modern system, actions may be formulated abstractly by the control system, wherein further components of the technical system may then translate the abstract action into actuator commands such that the action is executed. For example, the control system of the manufacturing robot from above may determine to execute the action "gripping" and submit a control signal characterizing the action "gripping" to another component, wherein the other component translates the abstract action into, e.g., electric currents for a pump of a hydraulic of the robot or a motor, e.g., a servo motor, for controlling a gripper of the robot.

In general, an action executed by a robot may be considered safe with respect to some desired safety goal and/or desired behavior. An autonomous vehicle may, for example, be considered as performing safe actions if an action determined by the control system does not lead to a collision of the vehicle with other road participants and/or environmental entities.

Determining safe actions for a technical system is typically a non-trivial problem.

This is in parts due to the fact that safe actions (e.g., stop in the emergency lane) may not always contribute to a desired behavior of the technical system (e.g., travel to a desired destination) and may in fact even be detrimental to achieving the desired behavior.

Hence, it is desirable to obtain a control system for a technical system that is able to determine actions to be executed by the technical system, wherein the actions are safe with respect to one or multiple safety goals and wherein the actions further contribute to achieving a desired behavior.

Advantageously, the method with features of the independent claim 1 allows for determining a machine learning system that is configured to provide a control signal characterizing safe actions to be performed by a technical system. In addition to being safe, the actions determined by the machine learning system advantageously allow for achieving a desired behavior in addition to being safe as long as the desired behavior is safe.

Disclosure of the invention

In a first aspect, the invention concerns a computer-implemented method for training a machine learning system according to independent claim 1.

The machine learning system trained with the method may be understood as a part of a control system for controlling a technical system such as a robot, e.g., an at least partially automated vehicle, a drone, other autonomous agents, or a manufacturing machine. The control signal may characterize a high-level action to be performed (e.g., perform a lane change, grip a workpiece), wherein the control signal may then be processed further such that an actuator of the technical system is controlled such that the technical system performs the action characterized by the control signal.

The training method may be understood as advantageously being applicable for reinforcement learning. For example, the loss value may characterize a log likelihood of the distribution of potentially unsafe actions and training may be conducted using common reinforcement learning strategies, e.g., vanilla policy gradients, trust region policy optimization, or proximal policy optimization, wherein the machine learning system characterizes a parametrized policy and the loss value a main ingredient for policy optimization.

Preferably, the method may be used within a framework for generative adversarial imitation learning, wherein the machine learning system may again serve as parametrized policy. For example, the loss value may be determined by a discriminator and training the machine learning system may comprises training the policy module and the discriminator according to generative adversarial imitation learning. The loss value in this case may hence be understood as a reward obtained for fooling the discriminator.

Advantageously, the machine learning system comprises a safety module, which the inventors designed such that the machine learning system can be guaranteed to provide safe actions with respect to an environment of the technical system.

Internally, the machine learning system may be understood as first providing an action which may or may not be safe, hence a potentially unsafe action. This action may then be processed by the safety module and is transformed into a safe action if the safety module does not deem the potentially unsafe action to be safe with respect to a provided set of safe actions.

The actions determined from the machine learning system may especially be continuous actions. The output of the machine learning system may hence be a real-valued scalar or real-valued vector.

The machine learning system is provided an observation of the environment of the technical system as input in form of the state signal. The state signal may characterize the environment by providing measurements of certain aspects of the environment such as position of mobile or immobile entities, physical properties of the environment or entities of the environment (e.g., velocity, acceleration, temperature, or pressure). The state signal may especially be a real-valued scalar or a real-valued vector. For example, the technical system could sense the environment by means of an optical sensor (e.g., a lidar sensor, a camera, an ultrasonic sensor, or a thermal camera) providing an image and the image could be processed by another machine learning system, e.g., a convolutional neural network or a transformer, in order to determine a feature vector characterizing the image and thereby the environment. The feature vector could then be provided as state signal to the machine learning system. Alternatively, it is also possible that the state signal characterizes semantic information, e.g., distance to other elements of the environment such as humans, other robots, immobile structures, desired paths of the robot, or curvature of ways to travel along such as streets.

The machine learning system comprises the policy module for determining potentially unsafe actions based on the state signal. The policy module may be understood as being configured to determine the potentially unsafe action based on the state signal. The policy module preferably may be or may comprise a conditional normalizing flow, wherein the policy module determines an action by sampling from the conditional normalizing flow using the state signal as conditioning input. Alternatively, it is also possible to use a gaussian model, e.g., a conditional gaussian mixture model, as policy module.

This potentially unsafe action is then processed by the safety module. Preferably, if the potentially unsafe action is deemed safe with respect to the provided set of safe actions, the potentially unsafe action may be provided as safe action from the safety module. Otherwise, according to the invention, the potentially unsafe action is mapped to a safe action.

Advantageously, integrating the safety module at training time into the machine learning model allows for training the policy module to provide actions that can be turned into safe actions by the safety module all the while training the machine learning system to provide safe actions for achieving a maximum reward characterized by the loss function. Using a concrete example, while the action "park in the emergency lane" may always be chosen as safe action by an at least partially automated vehicle, the action may not achieve a desired goal of the vehicle travelling to a desired destination. Integrating the safety layer as proposed by the inventors allows for accounting for both goals.

Obtaining the safe action by the safety module comprises mapping the potentially unsafe action to an action from the set of safe actions if the potentially unsafe action is not in the set of safe actions, wherein the mapping is preferably performed by means of a piecewise diffeomorphism. In general, a function $g: A \rightarrow \overline{A}$ may be understood as a piecewise differentiable injection (diffeomorphism) if there exists a countable partition $(A_k)_k$ of the domain of $g$ and differentiable (on the interiors) injections $g_k: A_k \rightarrow \overline{A}$ such that $g|_{A_k} = g_k$.

Advantageously, having the safety module perform the mapping by means of a piecewise diffeomorphism allows for computing exact densities for the safe action based on a density provided for the potentially unsafe action and vice versa. In turn, being able to determine an exact mapping from the density for the safe action and the density of the potentially unsafe action allows for determining the gradient of the loss function with respect to the parameters of the policy without discontinuities or approximations. The inventors found that this allows for an improved performance of the machine learning system after training while determining only safe actions, wherein performance may be understood as the ability of the machine learning system's provided actions to gather a desired reward in terms of reinforcement learning or imitation learning.

Preferably, mapping the potentially unsafe action to an action from the set of safe actions comprises

- Determining a countable partition of the space of actions;
- Determining, for each set of the countable partition, whether the set is safe set or an unsafe set, wherein a set is determined as safe set if the set only comprises actions from the set of safe actions and if there exists a trajectory of actions for future states that comprises only safe actions and wherein a set is determined as unsafe set otherwise;
- If the potentially unsafe action is in an unsafe set:

  o Determining a safe set from the partition based on the distribution of the potentially unsafe actions;
  ◦ mapping the potentially unsafe action to an action from the safe set;
  ◦ Providing the action as safe action;

- Otherwise, providing the potentially unsafe action as safe action.

In other words, the space of actions (e.g., $\mathbb{R}$ for scalars and $\mathbb{R}^n$ for vectors) may be partitioned into countable sets, wherein the piecewise diffeomorphism may then act on the sets of the partition. This allows for determining the exact density of the safe action according to the change of variables formula:

$$p_{\bar{a}}(\bar{a}) = \sum_{k: \bar{a} \in g_k(A_k)} \left| \det \left( J_{g_k^{-1}}(\hat{a}) \right) \right| p_{\hat{a}}(g_k^{-1}(\bar{a})),$$

wherein $g_k$ is the piecewise diffeomorphism, $\hat{a}$ is the potentially unsafe action, $\bar{a}$ is the safe action, $J$ is the Jacobian, $p_{\hat{a}}$ is a probability density function for the potentially unsafe action and $p_{\bar{a}}$ is a probability density function for the safe action.

Preferably, the partition elements may be hypercubes in the action space. For example, for a two-dimensional action space the partition elements may be nonoverlapping rectangles, e.g., squares. The hypercubes may in general also only span a subspace of the action space, e.g., if for a continuous action space only a subset of actions is relevant for controlling the technical system.

Given the partition elements (i.e., sets of the partition) and the set of safe actions, it is then possible to determine for each partition element, whether the respective partition element comprises only safe actions. If so, the partition element may be considered as safe, wherein if it does not only contain safe actions it may be considered unsafe. This way, the action space may be divided in safe regions (indicated by the safe partition elements) and unsafe regions (indicated by the unsafe partition elements).

In addition, a partition element may preferably be marked as safe only if each action allows for a trajectory of safe action. In other words, the additional requirement may indicate that for an action to be considered safe, the action has to allow for future actions (i.e., the actions along the trajectory) that are also safe and not lead to a situation, where there is no more safe action can be determined by the machine learning system. The future actions may also consider actions from other agents (e.g., other road participants in case of an at least partially automated vehicle). Preferably, the set of safe actions for a state s may hence be defined as:

$$\bar{A}_t^s = \{a \in A: \text{exists } \pi_{t+1:T}, \text{s. t. for all } \phi_{t:T}, t < t' \leq T,$$

$d(s_{t'}) \leq 0$ holds when starting from *(s, a)* at *t}*,
**wherein** *a* is an action from the action space *A*, $\pi_{t+1:T}$ is a future trajectory starting from timepoint *t* for a policy $\pi$, $\varphi_{t:T}$ is a trajectory of other agents in the environment (policies of other agents if other agents are present in the environment), $s_{t'}$ is the state at *t'* under the dynamics implied by the above policies, and *d* is a function characterizing a safety cost. The safety cost may, for example, characterize potentially dangerous situations with a safety cost greater than zero (e.g., a state in which a collision of the technical system with elements of its environment is likely or unavoidable but has not yet happened may be assigned a safety cost greater than zero). Likewise, states that characterize a violation of a safety goal (e.g., collision with elements of the environment, unexpected maneuvers) may be assigned a safety cost greater than zero.

Preferably, one can determine for a given state whether there exists a future trajectory with safety cost less or equal to zero by an optimization characterized by the formula:

$$w_t(s,a) = \min_{\pi_{t+1:T}} \max_{\Phi_{t:T}} \max_{t' \in t+1:T} d(s_{t'}) \text{ for all } t.$$

From the definition of $w_t$ it follows that the set of safe actions can also be expressed as

$$\bar{A}_t^s = \{a : w_{t(s,a)} \leq 0\}.$$

While in certain limited scenarios, it may be possible to compute the safe action set analytically, the inventors found that this may not be the case in general. Advantageously, the inventors found thar it is possible to circumvent the need for explicitly determining the whole set analytically, while nonetheless giving guarantees. This may be achieved, by checking $w_t(s, a)$ for a state s for just a finite sample of a's and then conclude on the value of $w_t(s, \cdot)$ on neighborhoods of the sampled a's using Lipschitz continuity or extremality/convexity arguments. This way, an inner approximation $\tilde{A}_t^s$ of the set of safe actions $\bar{A}_t^s$ may be obtained. An inner approximation may be understood as $\tilde{A}_t^s$ being a subset of $\bar{A}_{t\cdot}^s$. The inner approximation may then be used as set of safe actions in the proposed method.

Alternatively, the inner approximation may be obtained based on knowing the safety cost of a finite set of corners or extremal points that span a partition element advantageously allows for assessing whether the entire partition element contains only safe actions.

A preferred way of determining the set of safe actions may hence be formulated by partitioning the space of actions into regular boxes (hyper-rectangles) $(A_k)_{k=1}^K$ and then evaluating for each box $A_k$ the worst case total safety cost $w_t(s_t, a)$ by either an action $a$ at the center of the respective box and then using the Lipschitz continuity argument to check if $w_t(s_t, \cdot) \leq 0$ for the full box $A_k$ or by actions $a$ at the corner of the box $A_k$ and determining the box as safe iff $w_t(s_t, \cdot) \leq 0$ at all corners.

Preferably, the set of safe actions contains fail-safe actions that may be executed by the technical system in case no other safe action can be found. The fail-safe actions may comprise actions for bringing the technical system into a fail-safe state, e.g., by directing the technical system into a safe position (e.g., an emergency lane), performing an emergency maneuver (e.g., an emergency brake), or by powering of the technical system.

In other embodiments, it is also possible that the steps of determining a safe set, mapping the potentially unsafe action to an action from the safe set, and providing the action as safe action may also be conducted even if the potentially unsafe action is already in a safe set, i.e., the steps are executed in any case. This may be due to preference in implementation of the proposed method. However, it is also possible that a safe action is considered even safer than the potentially unsafe action even if the potentially unsafe action resides in a safe set of the partition of the action space. A safer action could be understood, e.g., an action that allows for keeping an even bigger distance to other elements of the environment compared to another action.

Preferably, determining the safe set to map the potentially unsafe action into comprises determining, for each safe set in the partition, a probability density of a representative action of the respective safe set of the partition with respect to the distribution of potentially unsafe actions, wherein the safe set comprising the representative action with highest probability density value is provided as determined safe set.

A representative action may be understood as an action from a respective set of the partition, wherein the set is considered safe. The action may be considered representative in the sense that a probability density determined for the representative action may act as an approximation of the probability density of the set itself.

The representative action may, for example, be chosen such that the representative action lies at a center of a respective partition element. For example, considering a Euclidean space of actions, the representative action may be mean of the set.

Preferably, the representative action may also be chosen based on the potentially unsafe action. For example, a relative position of the potentially unsafe action in its unsafe set may be determined and the representative action for a safe set may then be chosen to be at the same relative position in the safe set as had the potentially unsafe action in the unsafe set.

It is also possible that multiple representative actions are used for determining the safe set to map the potentially unsafe action into. For example, multiple representative actions may be selected at predefined positions and/or positions including a relative position of the potentially unsafe action with respect to the unsafe set and an average probability density value of these representative actions may then be used for characterizing a probability density of the respective safe sets.

Advantageously, this allows for mapping the potentially unsafe action to an action that is still considered feasible by the policy module while allowing for staying safe. This may be understood as finding a best compromise between an action considered to be the best by the policy module to achieve a desired goal (e.g., maximum reward, maximum imitation accuracy) while performing only safe actions.

Alternatively, it is also possible that determining the safe set comprises determining, for each safe set in the partition, a probability density of a representative action of the respective safe set of the partition with respect to the distribution of potentially unsafe actions, wherein a safe set is sampled based on the determined probability densities and the sampled safe set is provided as determined safe set.

This embodiment may be understood as determining a mixture model over the space of safe actions and then sampling from the mixture model. Advantageously, this allows the method to also explore actions that may not be associated with the highest density with respect to the distribution of potentially unsafe actions. The inventors found that this exploration characteristic allows for overcoming local minima during training and hence for an increased performance of the machine learning system after training.

Alternatively, the safe set may also be determined by choosing the set from the partition that is deemed safe and has a minimal distance to the potentially unsafe action.

A distance from a partition element may be understood as a minimal distance of any action the partition element to the potentially unsafe action. Choosing the partition element with minimal distance to the action likewise allows for obtaining a good compromise between an action considered to be the best by the policy module to achieve maximum and staying safe.

Having determined a safe set to map into, mapping the potentially unsafe action to an action from the safe set and providing the action as safe action may preferably comprise determining a relative position of the potentially unsafe action in the unsafe set and providing the action at the relative position in the safe set as safe action.

In other words, the relative position of the potentially unsafe action in its original partition element may be determined and the safe action may then be chosen according to this relative distance, e.g., by choosing the action in the determined safe set that is at the same relative position in the safe set as was the potentially unsafe action in the unsafe set.

Alternatively, it is also possible that mapping the potentially unsafe action to an action from the safe set and providing the action as safe action comprises determining an action from the safe set that has a minimal distance to the potentially unsafe action and providing the action as safe action.

Preferably, the policy module is or comprises a conditional normalizing flow, wherein the potentially unsafe action is determined by sampling from the conditional normalizing flow conditional on the state signal.

Alternatively, the policy module may be or may comprises a conditional mixture model, wherein the potentially unsafe action is determined by sampling from the conditional model mixture model conditional on the state signal.

In another aspect, the invention concerns a machine learning system configured according to any one of the embodiments described before. In particular, the machine learning system may comprise a policy module and a safety module as described above.

The advantage of the machine learning system is that the safety module may be trained in combination with the policy module (as described above). This advantageously allows for the machine learning system to achieve a better performance with respect to determining actions to be executed by the technical system.

In a further aspect, the invention concerns a computer-implemented method for determining a control signal for controlling an actuator of a technical system, wherein the method comprises the steps of:

- Training a machine learning system using the method for training as proposed above;
- Determining the control signal by means of the trained machined learning system and based on a state signal of an environment.

This may be understood as first training the machine learning system and then performing inference on the machine learning system. During inference, a potentially unsafe action may be mapped to a safe action as can be done during training (e.g., as presented above).

In a further aspect, the invention concerns a computer-implemented method for training a machine learning system as described above, wherein the policy module is trained according to a reinforcement learning paradigm or an imitation learning paradigm and wherein during inference of the machine learning system potentially unsafe actions provided by the policy module are mapped to safe actions according to the step of obtaining, by the safety module of the machine learning system, the safe action as described above.

In other words, the safety module comprised by the machine learning system may only be used during inference.

That is, the policy module may be trained individually (e.g., using a reinforcement learning algorithm such as policy gradients or an imitation learning algorithm such as generative adversarial imitation learning) and the safety module may be "tacked on" during inference. In general, for inferring a safe action from the safety module based on a potentially unsafe action the same steps may be used as were used during training. That is, the steps for mapping from a potentially unsafe action to a safe action disclosed in the aforementioned and the following embodiments are applicable during inference as well.

Embodiments of the invention will be discussed with reference to the following figures in more detail. The figures show:

Figure 1    a machine learning system;

Figure 2    a diagram depicting steps of a method for training the machine learning system;

Figure 3    exemplarily a mapping of a potentially unsafe action to a safe action;

Figure 4    a control system comprising a machine learning system controlling an actuator in its environment;

Figure 5    the control system controlling an at least partially autonomous robot;

Figure 6    the control system controlling a manufacturing machine;

Figure 7    a training system for training the machine learning system.

**Description** of the embodiments

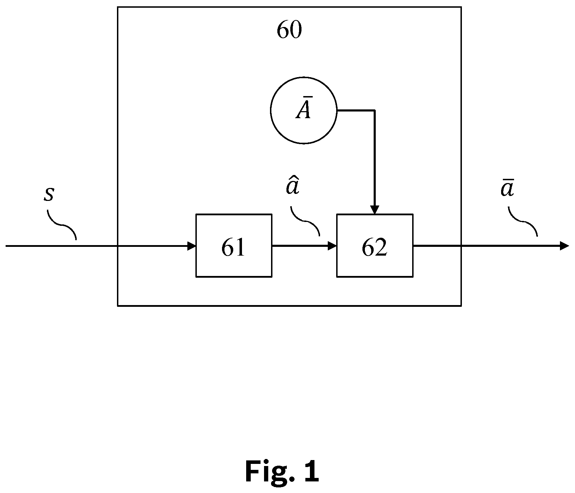

Figure 1 shows a machine learning system (60) for determining a safe action ($\bar{a}$), wherein the safe action ($\bar{a}$) is used for controlling a technical system. The machine learning system (60) determines the safe action ($\bar{a}$) based on a state signal (s) provided to the machine learning system (60). The state signal (s) is processed by a parametrized policy module (61) of the machine learning system, wherein the policy module (61) is configured to provide a probability distribution for an action to be performed by the technical system. The policy module (61) may preferably comprise or be a conditional generative model using the state signal (s) as condition. Preferably, the generative model may be a conditional normalizing flow or a conditional gaussian model, e.g., a conditional gaussian mixture model.

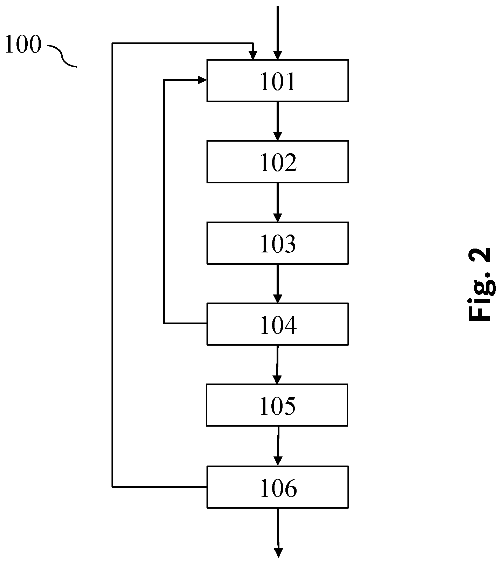

A potentially unsafe action ($\hat{a}$) may then be sampled from the policy module (61), wherein the potentially unsafe action ($\hat{a}$) is then processed by a safety module (62) of the machine learning system (60). The safety module (62) is configured to map the potentially unsafe action ($\hat{a}$) to the safe action ($\bar{a}$) if the safety module (62) deems the potentially unsafe action ($\hat{a}$) to actually be unsafe. The safety module (62) determines the safety of the potentially unsafe action ($\hat{a}$) based on a provided set of safe actions ($\bar{A}$) that may be safely executed by the technical system in the environment. If the potentially unsafe action ($\hat{a}$) is determined to be unsafe, the safety module (62) performs a mapping by means of a piecewise diffeomorphism from the unsafe action ($\hat{a}$) to the safe action ($\bar{a}$). The determined safe action ($\bar{a}$) is then put out by the machine learning system (60). **Figure** 2 **shows** a flow chart of a method (100) for training the machine learning system (60). The method starts with a first step (101), wherein in the first step (101) a state signal (s) is determined from the environment of the technical system.

In a second step (102), the policy module (61) of the machine learning system (60) then determines the probability distribution for actions from the preferably continuous action space.

In a third step (103) a potentially unsafe action ($\hat{a}$) is sampled from the probability distribution.

In a fourth step (104), the safety module (62) of the machine learning system (60) obtains a safe action ($\bar{a}$) based on the potentially unsafe action ($\hat{a}$) by means of the diffeomorphism.

The steps one (101) to four (104) may preferably be repeated in order to determine a trajectory of state signals (s) and safe actions ($\bar{a}$). The trajectory may then be used in a fifth step (105) of the method (100) for determining a loss value with respect to the actions. The loss value may preferably characterize a desired goal to be achieved. For example, the loss value may characterize an expected return. Preferably, the loss value is determined according to the framework of generative adversarial imitation learning, i.e., by comparing the determined trajectory to trajectories determined by an expert, wherein the comparison is performed based on a discriminator.

In a sixth step (106), parameters of the policy module (61) are then updated. Preferably, this is achieved by means of gradient descent, wherein a gradient of the loss value with respect to parameters of the policy module (61) is determined.

Preferably, the steps one (101) to six (106) are repeated iteratively until a desired amount of iterations is achieved and/or until the loss value or a loss value with respect to a validation set is equal to or below a predefined threshold. If one of the described exit criteria is met, the method (100) ends.

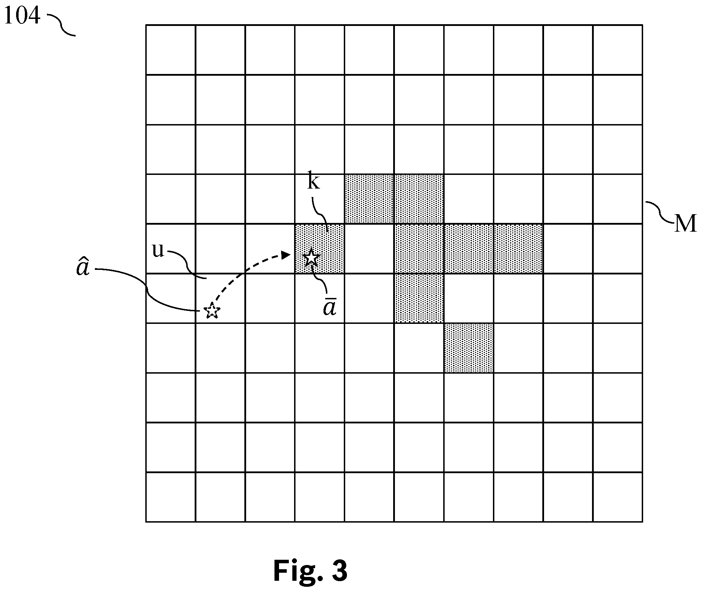

**Figure** 3 **depicts** the fourth step (104) of the method (100) for training in more detail. The action space is partitioned into a partition (M), wherein the partition elements are boxes. The figure depicts an embodiment of a 2-dimensional action space. Preferably, the boxes are chosen to be squares, wherein an edge length of a box may be considered a hyperparameter of the method (100). It should be noted that the partition does not need to span the entire possible action space. For example, it is also possible that prior information allows for partitioning only a subspace of the action space.

In general, the shape of a box (e.g., geometric figure, length of sides, number of points in a polygon defining partition elements) may be considered a hyperparameter of the method (100). The partition elements, i.e., the different subsets of the action space may then be categorized as either safe sets (k) (indicated by shaded squares in the figure) and unsafe sets (u) (indicated by white squares in the figure). Determining whether a partition element (i.e., subset of the action space) is safe or not may be achieved by means of determining a worst-case safety cost $w_t(s_t, a)$ as described earlier. For example, an action at the center of a box may be used to infer whether all actions in a box are safe and there exists a future trajectory of only safe options.

In the embodiment depicted in figure 3, the potentially unsafe action ($\hat{a}$) is determined to fall into an unsafe region of the action space (i.e., it is part of an unsafe set (u) from the partition (M)). The potentially unsafe action ($\hat{a}$) is hence mapped into a safe set (k). The safe set (k) may be determined by selecting the partition element of the partition (M) that is closest to the potentially unsafe action ($\hat{a}$) in terms of a distance measure on the action space, e.g., an $L_p$-norm. Alternatively, it is also possible to determine a density for actions acting as representatives for respective partition element, e.g., action at the center of the respective boxes. For example, for each partition element that is determined as safe a density of a respective action at the center may be determined based on the density determined from the policy module (61) and the partition element with highest density may be chosen as safe set (k).

In the embodiment, mapping the potentially unsafe action ($\hat{a}$) to the safe action ($\bar{a}$) is then achieved by determining a relative position of the potentially unsafe action ($\hat{a}$) in the unsafe set (u) along the horizontal and vertical axes and providing the action from the safe set (k) as safe action ($\bar{a}$) that has a same relative position along the horizontal and vertical axes in the safe set (k).

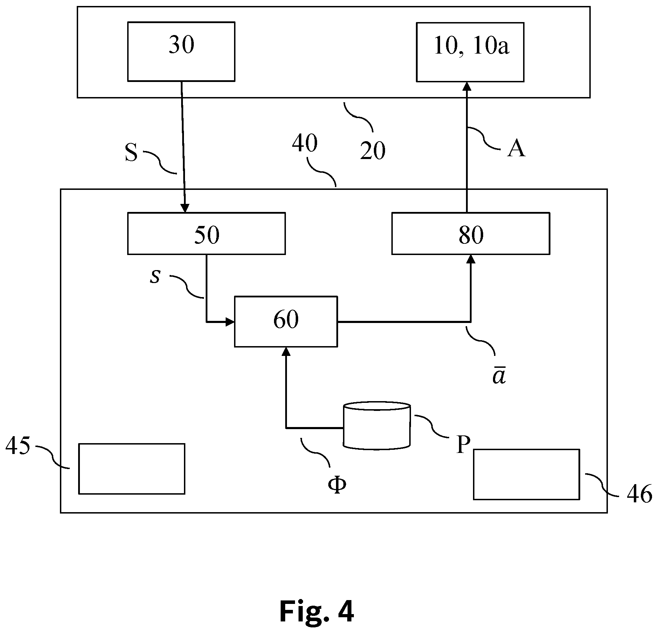

Figure 4 shows a control system (40) comprising the machine learning system (60) for determining a control signal (A) for controlling an actuator (10) of a technical system in its environment (20). The actuator (10) interacts with the control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into state signals (s). Alternatively, in case of no receiving unit (50), each sensor signal (S) may directly be taken as a state signal (s).

The state signal (s) is then passed on to a machine learning system (60).

The machine learning system (60) is parametrized by parameters (Φ), which are stored in and provided by a parameter storage ($St_1$).

The machine learning system (60) determines a safe action ($\bar{a}$) from the sate signal (s). The safe action ($\bar{a}$) is transmitted to an optional conversion unit (80), which converts the safe action ($\bar{a}$) into the control signals (A). The control signals (A) are then transmitted to the actuator (10) for controlling the actuator (10) accordingly. Alternatively, the safe action ($\bar{a}$) may already characterize a control signal (A) and may be submitted to the actuator (10) directly.

The actuator (10) receives control signals (A), is controlled accordingly, and carries out the safe action ($\bar{a}$) corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

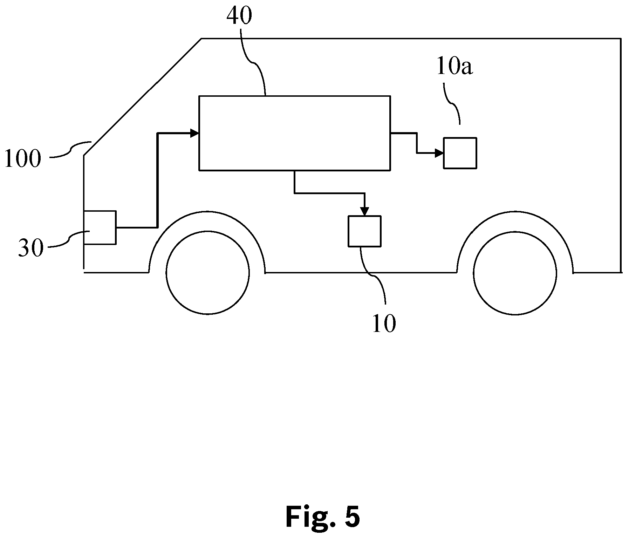

Figure 5 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The state signal (s) derived from the sensor signal (S) may characterize information about the environment of the vehicle, e.g. curvature of the road the vehicle (100) currently travels along and/or information about distance to other traffic participants and/or immobile environment entities such as trees, houses, or traffic cones and/or information about lanes or lane markings of the road. Alternatively, the sate signal *(s)* may characterize an image of the environment.

The machine learning system (60) may be configured to determine an action to be executed by the vehicle (100), e.g., a longitudinal and/or lateral acceleration. The action may be chosen by the machine learning system (60) such that the vehicle (100) follows a predefined path while not colliding with other elements of its environment, e.g., road participants. As a fail-safe action or fail-safe actions, the action determined by the machine learning system (60) may characterize an emergency brake and/or an emergency evasive steering and/or a lane switch into an emergency lane.

The actuator (10), which is preferably integrated in the vehicle (100), may be given by a brake, a propulsion system, an engine, a drivetrain, or a steering of the vehicle (100).

Alternatively or additionally, the control signal (A) may also be used to control the display (10a), e.g., for displaying the safe action ($\bar{a}$) determined by the machine learning system (60) and/or for displaying the partition of safe actions.

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, a control signal (A) may be determined to cause the actuator (10) to spray the plants with a suitable quantity of suitable liquids and/or cut the plants. In the embodiment, the safe action ($\bar{a}$) may characterize a desired nozzle opening.

**In even further** embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

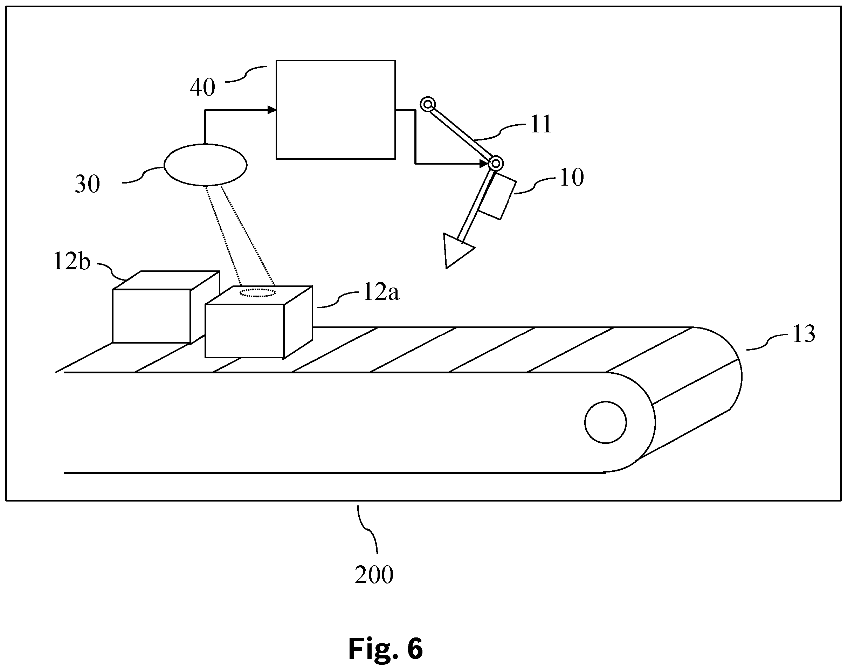

Figure 6 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The image machine learning system (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image machine learning system (60) classifies, whether the manufactured product is broken or exhibits a defect. The actuator (10) may then be controlled as to remove the manufactured product from the transportation device.

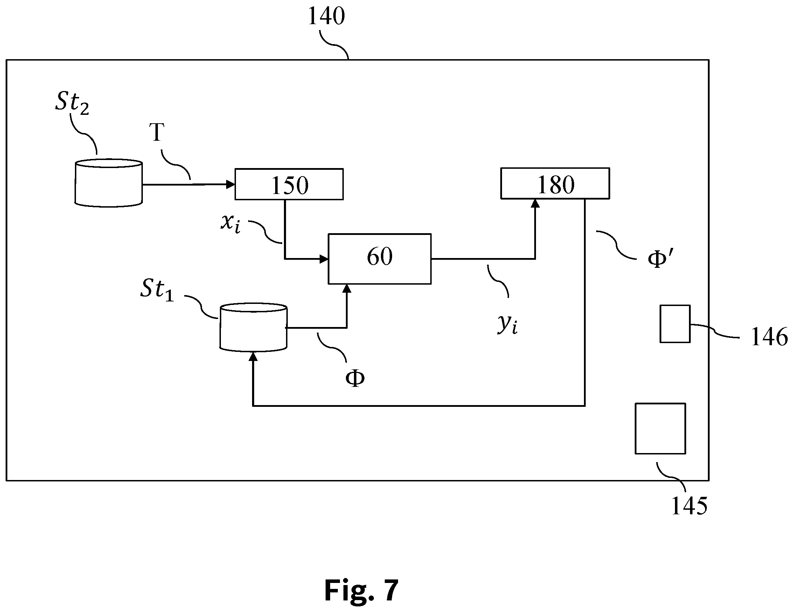

Figure 7 shows an embodiment of a training system (140) for training the machine learning system (60) of the control system (40) by means of a training data set (T). The training data set (T) comprises a plurality of states signals ($x_i$) which are used for training the machine learning system (60).

For training, a training data unit (150) accesses a computer-implemented database ($St_2$), the database ($St_2$) providing the training data set (T). The training data unit (150) determines from the training data set (T) preferably randomly at least one state signal ($x_i$) and transmits the state signal ($x_i$) to the machine learning system (60). The machine learning system (60) determines a safe action ($y_i$) based on the state signal ($x_i$).

The determined safe action ($y_i$) is transmitted to a modification unit (180).

Based on the determined safe action ($y_i$), the modification unit (180) then determines new parameters ($\Phi'$) for the machine learning system (60). This may be achieved according to known reinforcement learning methods such as vanilla policy gradients, trust region policy optimization, proximal policy optimization, deep deterministic policy gradients, or actor-critic methods. Preferably, the new parameters may be determined according to the method of generative adversarial imitation learning.

The modification unit (180) determines the new parameters ($\Phi'$) based on a loss value. In the given embodiment, this is done using a gradient ascent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the loss value falls below a predefined threshold value. Alternatively or additionally, it is also conceivable that training is terminated when an average loss value with respect to a test or validation data set falls below a predefined threshold value. In at least one of the iterations the new parameters ($\Phi'$) determined in a previous iteration are used as parameters ($\Phi$) of the machine learning system (60) for a further iteration.

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

## Claims

1. Computer-implemented method (100) for training a machine learning system (60), wherein the machine learning system is configured to determine a control signal (A) characterizing an action to be executed by a technical system (40, 100, 200), wherein the method for training comprises the steps of:

   • Obtaining a safe action ($\bar{a}$) to be executed by the technical system (100, 200), wherein obtaining the safe action ($\bar{a}$) comprises the steps of:

     ◦ Obtaining (101) a state signal ($s$), wherein the state signal ($s$) characterizes a state of the environment of the technical system;
     ◦ Determining (102), by a parametrized policy module (61) of the machine learning system (60), a distribution of potentially unsafe actions that could be executed by the technical system (100, 200), wherein the policy module (61) determines the distribution based on the obtained state signal (s);
     ◦ Sampling (103) a potentially unsafe action ($\hat{a}$) from the distribution;
     ◦ Obtaining (104), by a safety module (62) of the machine learning system (60), the safe action ($\bar{a}$), wherein the safe action ($\bar{a}$) is obtained based on the sampled potentially unsafe action ($\hat{a}$) and a set of safe actions ($\bar{A}$) with respect to a current environment of the technical system (40, 100, 200), wherein obtaining (104) the safe action ($\bar{a}$) comprises mapping the potentially unsafe action ($\hat{a}$) to a safe action if the potentially unsafe action ($\hat{a}$) is not in the set of safe actions ($\bar{A}$);

   • Determining (105) a loss value based on the state signal (s) and the safe action ($\bar{a}$), wherein the loss value characterizes a reward obtained based on the safe action ($\bar{a}$);
   • Training (106) the machine learning system (60) by updating parameters ($\Phi$) of the policy module (61) according to a gradient of the loss value with respect to the parameters ($\Phi$).

2. Method (100) according to claim 1, wherein obtaining (104) the safe action ($\bar{a}$) by the safety module (62) comprises mapping the potentially unsafe action ($\hat{a}$) to an action from the set of safe actions ($\bar{A}$) if the potentially unsafe action ($\hat{a}$) is not in the set of safe actions ($\bar{A}$), wherein the mapping is performed by means of a piecewise diffeomorphism.

3. Method (100) according to claim 2, wherein mapping the potentially unsafe action ($\hat{a}$) to an action from the set of safe actions ($\bar{A}$) comprises

   • Determining a countable partition (M) of the space of actions;
   • Determining, for each set (u, k) of the countable partition (M), whether the set (u, k) is safe set (k) or an unsafe set (u), wherein a set is determined as safe set (k) if the set only comprises actions from the set of safe actions ($\bar{A}$) and if there exists a trajectory of actions for future states that comprises only safe actions and wherein a set is determined as unsafe set (u) otherwise;
   • If the potentially unsafe action ($\hat{a}$) is in an unsafe set (u):

- Determining a safe set (k) from the partition (M) based on the distribution of the potentially unsafe actions;
- mapping the potentially unsafe action (â) to an action from the safe set (k);
- Providing the action as safe action (a);

    • Otherwise, providing the potentially unsafe action (â) as safe action (a).

4. Method (100) according to claim 3, wherein determining the safe set (k) comprises determining, for each safe set in the partition, a probability density of a representative action of the respective safe set of the partition with respect to the distribution of potentially unsafe actions, wherein the safe set comprising the representative action with highest probability density value is provided as determined safe set (k).

5. Method (100) according to claim 3, wherein determining the safe set (k) comprises determining, for each safe set in the partition, a probability density of a representative action of the respective safe set of the partition with respect to the distribution of potentially unsafe actions, wherein a safe set is sampled based on the determined probability densities and the sampled safe set is provided as determined safe set (k).

6. Method (100) according to claim 3, wherein the safe set (k) is determined by choosing the set from the partition that is deemed safe and has a minimal distance to the potentially unsafe action (â).

7. Method (100) according to any one of the claims 3 to 6, wherein mapping the potentially unsafe action (â) to an action from the safe set (k) and providing the action as safe action (a) comprises determining a relative position of the potentially unsafe action (â) in the unsafe set (u) and providing the action at the relative position in the safe set (k) as safe action (a).

8. Method (100) according to any one of the claims 3 to 6 wherein mapping the potentially unsafe action (â) to an action from the safe set (k) and providing the action as safe action (a) comprises determining an action from the safe set (k) that has a minimal distance to the potentially unsafe action (â) and providing the action as safe action (a).

9. Method (100) according to any one of the claims 1 to 7, wherein the loss value is determined by a discriminator and training the machine learning system (60) comprises training the policy module (61) and the discriminator according to generative adversarial imitation learning.

10. Computer-implemented method for determining a control signal (A) for controlling an actuator (10) of a technical system (100, 200), wherein the method comprises the steps of:

    • Training a machine learning system (60) using the method according to any one of the claims 1 to 10;
    • Determining the control signal (A) by means of the trained machined learning system (60) and based on a state signal (s) of an environment of the inical system.

11. Machine learning system (60) trained according to claim 1.

12. Computer-implemented method for training the machine learning system (60) according to claim 11, wherein the policy module is trained according to a reinforcement learning paradigm or an imitation learning paradigm, wherein during inference of the machine learning system (60) potentially unsafe actions (â) provided by the policy module (61) are mapped to safe actions (a) according to the step (104) of obtaining, by the safety module (62) of the machine learning system (60), the safe action (a) according to any one of the claims 1 to 9.

13. Training system (140), which is configured to carry out the training method according to any one of the claims 1 to 9 or 12.

14. Computer program that is configured to cause a computer to carry out the method according to any one of the claims 1 to 10 or 12 with all of its steps if the computer program is carried out by a processor (45, 145).

15. Machine-readable storage medium (46, 146) on which the computer program according to claim 14 is stored.

**Patentansprüche**

1. Computer-implementiertes Verfahren (100) zum Trainieren eines maschinellen Lernsystems (60), wobei das maschinelle Lernsystem dazu ausgelegt ist, ein Steuerungssignal (A) zu bestimmen, das eine Aktion kennzeichnet, die von einem technischen System (40, 100, 200) auszuführen ist, wobei das Verfahren zum Trainieren die folgenden Schritte umfasst:

   • Erhalten einer sicheren Aktion $(\overline{\alpha})$, die von dem technischen System (100, 200) auszuführen ist, wobei das Erhalten der sicheren Aktion $(\overline{\alpha})$ die folgenden Schritte umfasst:

      ◦ Erhalten (101) eines Zustandssignals (s), wobei das Zustandssignal (s) einen Zustand der Umgebung des technischen Systems kennzeichnet;
      ◦ Bestimmen (102), durch ein parametrisiertes Strategiemodul (61) des maschinellen Lernsystems (60), einer Verteilung potentiell unsicherer Aktionen, die von dem technischen System (100, 200) ausgeführt werden könnten, wobei das Strategiemodul (61) die Verteilung basierend auf dem erhaltenen Zustandssignal (s) bestimmt;
      ◦ Ziehen einer Stichprobe (103) einer potentiell unsicheren Aktion $(\hat{\alpha})$ aus der Verteilung;
      ◦ Erhalten (104), durch ein Sicherheitsmodul (62) des maschinellen Lernsystems (60), der sicheren Aktion $(\overline{\alpha})$, wobei die sichere Aktion $(\overline{\alpha})$ basierend auf der gezogenen Stichprobe der potentiell unsicheren Aktion $(\hat{\alpha})$ und einer Menge sicherer Aktionen $(\overline{A})$ in Bezug auf eine aktuelle Umgebung des technischen Systems (40, 100, 200) erhalten wird, wobei das Erhalten (104) der sicheren Aktion $(\overline{\alpha})$ das Abbilden der potentiell unsicheren Aktion $(\hat{\alpha})$ auf eine sichere Aktion, wenn sich die potentiell unsichere Aktion $(\hat{\alpha})$ nicht in der Menge sicherer Aktionen $(\overline{A})$ befindet, umfasst;

   • Bestimmen (105) eines Verlustwertes basierend auf dem Zustandssignal (s) und der sicheren Aktion $(\overline{\alpha})$, wobei der Verlustwert eine Belohnung kennzeichnet, die basierend auf der sicheren Aktion $(\overline{\alpha})$ erhalten wird;
   • Trainieren (106) des maschinellen Lernsystems (60) durch Aktualisieren von Parametern $(\Phi)$ des Strategiemoduls (61) gemäß einem Gradienten des Verlustwertes in Bezug auf die Parameter $(\Phi)$.

2. Verfahren (100) nach Anspruch 1, wobei das Erhalten (104) der sicheren Aktion $(\overline{\alpha})$ durch das Sicherheitsmodul (62) das Abbilden der potentiell unsicheren Aktion $(\hat{\alpha})$ auf eine Aktion aus der Menge sicherer Aktionen $(\overline{A})$, wenn sich die potentiell unsichere Aktion $(\hat{\alpha})$ nicht in der Menge sicherer Aktionen $(\overline{A})$ befindet, umfasst, wobei das Abbilden mittels eines stückweisen Diffeomorphismus durchgeführt wird.

3. Verfahren (100) nach Anspruch 2, wobei das Abbilden der potentiell unsicheren Aktion $(\hat{\alpha})$ auf eine Aktion aus der Menge sicherer Aktionen $(\overline{A})$ Folgendes umfasst:

   • Bestimmen einer zählbaren Unterteilung (M) des Raumes von Aktionen;
   • Bestimmen, für jede Menge (u, k) der zählbaren Unterteilung (M), ob die Menge (u, k) eine sichere Menge (k) oder eine unsichere Menge (u) ist, wobei eine Menge als sichere Menge (k) bestimmt wird, wenn die Menge ausschließlich Aktionen aus der Menge sicherer Aktionen $(\overline{A})$ umfasst und wenn eine Trajektorie von Aktionen für zukünftige Zustände existiert, die ausschließlich sichere Aktionen umfasst, und wobei anderenfalls eine Menge als unsichere Menge (u) bestimmt wird;
   • Wenn sich die potentiell unsichere Aktion $(\hat{\alpha})$ in einer unsicheren Menge (u) befindet:

      ◦ Bestimmen einer sicheren Menge (k) aus der Unterteilung (M) basierend auf der Verteilung der potentiell unsicheren Aktionen;
      ◦ Abbilden der potentiell unsicheren Aktion $(\hat{\alpha})$ auf eine Aktion aus der sicheren Menge (k);
      ◦ Bereitstellen der Aktion als sichere Aktion (a);

   • Anderenfalls Bereitstellen der potentiell unsicheren Aktion $(\hat{\alpha})$ als sichere Aktion (a).

4. Verfahren (100) nach Anspruch 3, wobei das Bestimmen der sicheren Menge (k) das Bestimmen, für jede sichere Menge in der Unterteilung, einer Wahrscheinlichkeitsdichte einer repräsentativen Aktion der entsprechenden sicheren Menge der Unterteilung in Bezug auf die Verteilung potentiell unsicherer Aktionen umfasst, wobei die sichere Menge, die die repräsentative Aktion mit dem höchsten Wahrscheinlichkeitsdichtewert umfasst, als sichere Menge (k) bestimmt wird.

**5.** Verfahren (100) nach Anspruch 3, wobei das Bestimmen der sicheren Menge (k) das Bestimmen, für jede sichere Menge in der Unterteilung, einer Wahrscheinlichkeitsdichte einer repräsentativen Aktion der entsprechenden sicheren Menge der Unterteilung in Bezug auf die Verteilung potentiell unsicherer Aktionen umfasst, wobei aus einer sicheren Menge basierend auf den bestimmten Wahrscheinlichkeitsdichten eine Stichprobe gezogen wird und die sichere Menge, auf der die Stichprobe gezogen wurde, als sichere Menge (k) bereitgestellt wird.

**6.** Verfahren (100) nach Anspruch 3, wobei die sichere Menge (k) durch Auswählen derjenigen Menge aus der Unterteilung bestimmt wird, die als sicher gilt und einen minimalen Abstand zu der potentiell unsicheren Aktion ($\hat{\alpha}$) hat.

**7.** Verfahren (100) nach einem der Ansprüche 3 bis 6, wobei das Abbilden der potentiell unsicheren Aktion ($\hat{\alpha}$) auf eine Aktion aus der sicheren Menge (k) und das Bereitstellen der Aktion als sichere Aktion (a) das Bestimmen einer relativen Position der potentiell unsicheren Aktion ($\hat{\alpha}$) in der unsicheren Menge (u) und das Bereitstellen der Aktion an der relativen Position in der sicheren Menge (k) als sichere Aktion (a) umfasst.

**8.** Verfahren (100) nach einem der Ansprüche 3 bis 6, wobei das Abbilden der potentiell unsicheren Aktion ($\hat{\alpha}$) auf eine Aktion aus der sicheren Menge (k) und das Bereitstellen der Aktion als sichere Aktion (a) das Bestimmen einer Aktion aus der sicheren Menge (k), die einen minimalen Abstand zu der potentiell unsicheren Aktion ($\hat{\alpha}$) hat, und das Bereitstellen der Aktion als sichere Aktion (a) umfasst.

**9.** Verfahren (100) nach einem der Ansprüche 1 bis 7, wobei der Verlustwert durch einen Diskriminator bestimmt wird und das Trainieren des maschinellen Lernsystems (60) das Trainieren des Strategiemoduls (61) und des Diskriminators gemäß generativem, konkurrierendem Imitationslernen (Generative Adversarial Imitation Learning) umfasst.

**10.** Computer-implementiertes Verfahren zum Bestimmen eines Steuerungssignals (A) zum Steuern eines Aktuators (10) eines technischen Systems (100, 200), wobei das Verfahren die folgenden Schritte umfasst:

  • Trainieren eines maschinellen Lernsystems (60) unter Verwendung des Verfahrens nach einem der Ansprüche 1 bis 10;
  • Bestimmen des Steuerungssignals (A) mittels des trainierten maschinellen Lernsystems (60) und basierend auf einem Zustandssignal (s) einer Umgebung des technischen Systems.

**11.** Maschinelles Lernsystem (60), das gemäß Anspruch 1 trainiert ist.

**12.** Computer-implementiertes Verfahren zum Trainieren des maschinellen Lernsystems (60) nach Anspruch 11, wobei das Strategiemodul gemäß einem Verstärkungslernparadigma oder einem Imitationslernparadigma trainiert wird, wobei während der Inferenz des maschinellen Lernsystems (60) potentiell unsichere Aktionen ($\hat{\alpha}$), die von dem Strategiemodul (61) bereitgestellt werden, auf sichere Aktionen (a) abgebildet werden, gemäß dem Schritt (104) des Erhaltens, durch das Sicherheitsmodul (62) des maschinellen Lernsystems (60), der sicheren Aktion (a) nach einem der Ansprüche 1 bis 9.

**13.** Trainingssystem (140), das dafür ausgelegt ist, das Trainingsverfahren nach einem der Ansprüche 1 bis 9 oder 12 auszuführen.

**14.** Computerprogramm, das dafür ausgelegt ist, einen Computer zu veranlassen, das Verfahren nach einem der Ansprüche 1 bis 10 oder 12 mit allen seinen Schritten auszuführen, wenn das Computerprogramm von einem Prozessor (45, 145) ausgeführt wird.

**15.** Maschinenlesbares Speichermedium (46, 146), auf dem das Computerprogramm nach Anspruch 14 gespeichert ist.

**Revendications**

**1.** Procédé mis en œuvre par ordinateur (100) pour entraîner un système d'apprentissage automatique (60), dans lequel le système d'apprentissage automatique est configuré pour déterminer un signal de commande (A) caractérisant une action à exécuter par un système technique (40, 100, 200), dans lequel le procédé d'entraînement comprend les étapes suivantes :

• l'obtention d'une action sécurisée ($\overline{\alpha}$) à exécuter par le système technique (100, 200), dans lequel l'obtention de l'action sécurisée ($\overline{\alpha}$) comprend les étapes suivantes :

    ∘ l'obtention (101) d'un signal d'état (s), dans lequel le signal d'état (s) caractérise un état de l'environnement du système technique ;

    ∘ la détermination (102), par un module de politique paramétré (61) du système d'apprentissage automatique (60), d'une distribution d'actions potentiellement non sécurisées qui peuvent être exécutées par le système technique (100, 200), dans lequel le module de politique (61) détermine la distribution sur la base du signal d'état obtenu (s) ;

    ∘ l'échantillonnage (103) d'une action potentiellement non sécurisée ($\hat{\alpha}$) à partir de la distribution ;

    ∘ l'obtention (104), par un module de sécurité (62) du système d'apprentissage automatique (60), de l'action sécurisée ($\overline{\alpha}$), dans lequel l'action sécurisée ($\overline{\alpha}$) est obtenue sur la base de l'action potentiellement non sécurisée échantillonnée ($\hat{\alpha}$) et d'un ensemble d'actions sécurisées ($\overline{A}$) par rapport à un environnement actuel du système technique (40, 100, 200), dans lequel l'obtention (104) de l'action sécurisée ($\overline{\alpha}$) comprend la mise en correspondance de l'action potentiellement non sécurisée ($\hat{\alpha}$) avec une action sécurisée si l'action potentiellement non sécurisée ($\hat{\alpha}$) ne se trouve pas dans l'ensemble d'actions sécurisées ($\overline{A}$) ;

• la détermination (105) d'une valeur de perte sur la base du signal d'état (s) et de l'action sécurisée ($\overline{\alpha}$), dans lequel la valeur de perte caractérise une récompense obtenue sur la base de l'action sécurisée ($\overline{\alpha}$) ;

• l'entraînement (106) du système d'apprentissage automatique (60) par la mise à jour de paramètres ($\Phi$) du module de politique (61) en fonction d'un gradient de la valeur de perte par rapport aux paramètres ($\Phi$).

2. Procédé (100) selon la revendication 1, dans lequel l'obtention (104) de l'action sécurisée ($\overline{\alpha}$) par le module de sécurité (62) comprend la mise en correspondance de l'action potentiellement non sécurisée ($\hat{\alpha}$) avec une action de l'ensemble d'actions sécurisées ($\overline{A}$) si l'action potentiellement non sécurisée ($\hat{\alpha}$) ne se trouve pas dans l'ensemble d'actions sécurisées ($\overline{A}$), dans lequel la mise en correspondance est exécutée au moyen d'un difféomorphisme par morceaux.

3. Procédé (100) selon la revendication 2, dans lequel la mise en correspondance de l'action potentiellement non sécurisée ($\hat{\alpha}$) avec une action de l'ensemble d'actions sécurisées ($\overline{A}$) comprend

• la détermination d'une partition dénombrable (M) de l'espace d'actions ;

• la détermination, pour chaque ensemble (u, k) de la partition dénombrable (M), de si l'ensemble (u, k) est un ensemble sécurisé (k) ou un ensemble non sécurisé (u), dans lequel un ensemble est déterminé comme ensemble sécurisé (k) si l'ensemble comprend uniquement des actions de l'ensemble d'actions sécurisées ($\overline{A}$) et s'il existe une trajectoire d'actions pour des états futurs qui comprend uniquement des actions sécurisées, et dans lequel un ensemble est déterminé comme ensemble non sécurisé (u) sinon ;

• si l'action potentiellement non sécurisée ($\hat{\alpha}$) se trouve dans un ensemble non sécurisé (u) :

    ∘ la détermination d'un ensemble sécurisé (k) à partir de la partition (M) sur la base de la distribution des actions potentiellement non sécurisées ;

    ∘ la mise en correspondance de l'action potentiellement non sécurisée ($\hat{\alpha}$) avec une action de l'ensemble sécurisé (k) ;

    ∘ la fourniture de l'action en tant qu'action sécurisée (a) ;

• sinon, la fourniture de l'action potentiellement non sécurisée ($\hat{\alpha}$) en tant qu'action sécurisée ($\alpha$).

4. Procédé (100) selon la revendication 3, dans lequel la détermination de l'ensemble sécurisé (k) comprend la détermination, pour chaque ensemble sécurisé dans la partition, d'une densité de probabilité d'une action représentative de l'ensemble sécurisé respectif de la partition par rapport à la distribution d'actions potentiellement non sécurisées, dans lequel l'ensemble sécurisé comprenant l'action représentative ayant la valeur de densité de probabilité la plus élevée est fourni comme ensemble sécurisé déterminé (k).

5. Procédé (100) selon la revendication 3, dans lequel la détermination de l'ensemble sécurisé (k) comprend la détermination, pour chaque ensemble sécurisé dans la partition, d'une densité de probabilité d'une action représentative de l'ensemble sécurisé respectif de la partition par rapport à la distribution d'actions potentiellement non sécurisées, dans lequel un ensemble sécurisé est échantillonné sur la base des densités de probabilité déterminées et l'ensemble sécurisé échantillonné est fourni comme ensemble sécurisé déterminé (k).

**6.** Procédé (100) selon la revendication 3, dans lequel l'ensemble sécurisé (k) est déterminé par la sélection de l'ensemble de la partition qui est considéré comme sécurisé et présente une distance minimale par rapport à l'action potentiellement non sécurisée ($\hat{\alpha}$).

**7.** Procédé (100) selon l'une quelconque des revendications 3 à 6, dans lequel la mise en correspondance de l'action potentiellement non sécurisée ($\hat{\alpha}$) avec une action de l'ensemble sécurisé (k) et la fourniture de l'action en tant qu'action sécurisée ($\alpha$) comprend la détermination d'une position relative de l'action potentiellement non sécurisée ($\hat{\alpha}$) dans l'ensemble non sécurisé (u) et la fourniture de l'action à la position relative dans l'ensemble sécurisé (k) en tant qu'action sécurisée ($\alpha$).

**8.** Procédé (100) selon l'une quelconque des revendications 3 à 6, dans lequel la mise en correspondance de l'action potentiellement non sécurisée ($\hat{\alpha}$) avec une action de l'ensemble sécurisé (k) et la fourniture de l'action en tant qu'action sécurisée ($\alpha$) comprend la détermination d'une action de l'ensemble sécurisé (k) qui présente une distance minimale par rapport à l'action potentiellement non sécurisée ($\hat{\alpha}$) et la fourniture de l'action en tant qu'action sécurisée ($\alpha$).

**9.** Procédé (100) selon l'une quelconque des revendications 1 à 7, dans lequel la valeur de perte est déterminée par un discriminateur et l'entraînement du système d'apprentissage automatique (60) comprend l'entraînement du module de politique (61) et du discriminateur en fonction d'un apprentissage par imitation antagoniste générative.

**10.** Procédé mis en œuvre par ordinateur pour déterminer un signal de commande (A) pour commander un actionneur (10) d'un système technique (100, 200), dans lequel le procédé comprend les étapes suivantes :

• l'entraînement d'un système d'apprentissage automatique (60) au moyen du procédé selon l'une quelconque des revendications 1 à 10 ;
• la détermination du signal de commande (A) au moyen du système d'apprentissage automatique entraîné (60) et sur la base d'un signal d'état (s) d'un environnement du système technique.

**11.** Système d'apprentissage automatique (60) entraîné selon la revendication 1.

**12.** Procédé mis en œuvre par ordinateur pour entraîner le système d'apprentissage automatique (60) selon la revendication 11, dans lequel le module de politique est entraîné selon un paradigme d'apprentissage par renforcement ou un paradigme d'apprentissage par imitation, dans lequel pendant une inférence du système d'apprentissage automatique (60), des actions potentiellement non sécurisées ($\hat{\alpha}$) fournies par le module de politique (61) sont mises en correspondance avec des actions sécurisées ($\alpha$) conformément à l'étape (104) d'obtention, par le module de sécurité (62) du système d'apprentissage automatique (60), de l'action sécurisée ($\alpha$) selon l'une quelconque des revendications 1 à 9.

**13.** Système d'entraînement (140), configuré pour réaliser le procédé d'entraînement selon l'une quelconque des revendications 1 à 9 ou 12.

**14.** Programme informatique configuré pour amener un ordinateur à réaliser le procédé selon l'une quelconque des revendications 1 à 10 ou 12 avec toutes ses étapes si le programme informatique est réalisé par un processeur (45, 145).

**15.** Support de stockage lisible par machine (46, 146) sur lequel le programme d'ordinateur selon la revendication 14 est stocké.

Fig. 1

Fig. 2

**Fig. 3**

EP 4 239 423 B1

**Fig. 4**

EP 4 239 423 B1

**Fig. 5**

**Fig. 6**

EP 4 239 423 B1

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3838505 A1

- US 20200104680 A1

**Non-patent literature cited in the description**

- **BHATTACHARYYA et al.** *Modeling Human Driving Behavior through Generative Adversarial Imitation Learning*, 2020, https://arxiv.org/abs/2006.06412v1